# EUROPEAN PATENT APPLICATION

(11) **EP 4 385 453 A1**
(43) Date of publication of application: **19.06.2024**
(21) Application number: 22856019.9
(22) Date of filing: 07.07.2022
(51) Int. Cl.: A61C 8/00, A61C 3/02

(54) **MULTIFUNCTIONAL DRILL KIT FOR IMPLANT SURGERY**

(30) Priority: 10.08.2021 KR 20210105471
(71) Applicant: Megagen Implant Co., Ltd., Dalseong-gun, Daegu 42921 (KR)
(72) Inventor: PARK, Kwang Bum, Daegu 42016 (KR)
(74) Representative: Patentanwälte Hemmer Lindfeld Frese Partnerschaft mbB
(86) International application number: PCT/KR2022/009858
(87) International publication number: WO 2023/018017

(57) **Abstract**

Disclosed is a multifunctional drill kit for an implant surgery. A multifunctional drill kit for an implant surgery according to an embodiment of the present inventive concept includes a kit main body in which a plurality of drill holding grooves are formed, and a cutting-force doubling drill set attachably/detachably arranged in at least any one of the plurality of drill holding grooves of the kit main body, and performing a dedicated drill work that doubles a cutting force to an alveolar bone when processing a screw hole.

## Description

### TECHNICAL FIELD

The present inventive concept relates to a multifunctional drill kit for an implant surgery, and more particularly, to a multifunctional drill kit for an implant surgery, which may increase efficiency of management and handling and also remarkably improve convenience of an implant surgery, by managing, as a set, drills with individual functions to perform a dedicated drill work for doubling a cutting force for an unusual and sophisticated implant surgery.

### BACKGROUND ART

An implant originally means a substitute used to restore lost human tissues. In a dental field, however, the implant refers to a series of surgeries to implant an artificial tooth.

In other words, the implant is a series of surgeries to restore the function of a tooth by placing a fixture on an alveolar bone where a tooth is lost, and then fixing an artificial tooth thereon. The fixture is a tooth root made of titanium and the like having no rejection by the human body to replace a lost tooth root (root).

For general prostheses or dentures, while the surrounding teeth and bone are damaged as time passes, the implant does not damage the surrounding teeth tissues, has the same function and shape as a natural tooth, and does not cause cavities, and thus, it is advantageous that the implant can be used semi-permanently.

In the artificial tooth surgery (or referred to as an implant or an implant surgery), it is general to make, by using a drill, a screw hole in an alveolar bone at a placement position where a fixture is to be placed, place the fixture into the screw hole to be osseointegrated with the bone to form an artificial tooth root, couple an abutment to the fixture, and then completely capping the abutment with a crown as an artificial tooth, which is a final prosthesis

The implant not only restores a single missing tooth, but also improves the function of dentures for partially edentulous and completely edentulous patients, and improves the aesthetic aspect of dental prosthetic restorations. Furthermore, the implant distributes excessive stress applied to the surrounding supporting bone tissues and also helps the stabilization of the dentition.

As described above, in order to place the fixture, a screw hole is formed by punching a hole in the alveolar bone by using a drill.

Such a drill work is briefly discussed below. The drill work described below is a mere example and there may be a variety of types of drill works.

First, a position where a fixture is to be placed is determined on a surface of the alveolar bon by using a round drill as an initial drill,

Next, after cutting and slightly opening an end portion of the alveolar bone where a tooth is lost, a hole of a predetermined depth is punched by mounting a guide drill on a predetermined tool, with water supplied to the alveolar bone.

The hole is enlarged by using a first drill with water supplied to the alveolar bone, and an end portion of the hole is enlarged by using a pilot drill with water supplied to the alveolar bone.

Next, a lower end portion of the hole is enlarged by using a final drill with water supplied to the alveolar bone. Subsequently, the screw hole for placing a fixture is completed by forming a screw thread in the hole by using a tap drill with water supplied to the alveolar bone.

It is general to form a screw hole for placing a fixture by performing a drill work in the manner as above, which may be suitable for patients having an ordinary and typical the alveolar bone.

However, when the alveolar bone is not general so that forming a simply screw hole by a simple drill work is difficult, a drill work for a relatively sophisticated surgery needs to precede. In this case, there is a need to process by adjust the depth of a screw hole step by step by using a dedicated drill suitable therefor.

Furthermore, for sophisticated surgeries, it may be necessary to use a separate dedicated drill with excellent bone removal ability that a regular drill cannot provide, that is, a dedicated drill with excellent cutting power.

In order to perform a sophisticated implant surgery, which is not a normal situation, drills with the corresponding functions are prepared one by one and set on a surgical table, and then the implant surgery is performed. However, considering that performing an implant surgery, while preparing these dedicated drills one by one, is inconvenient and cumbersome, there is a need for a previously unknown, new concept multifunctional drill kit for an implant surgery.

### DETAILED DESCRIPTION OF THE INVENTIVE CONCEPT

### TECHNICAL PROBLEM

Provided is a multifunctional drill kit for an implant surgery, which may increase efficiency of management and handling and also remarkably improve convenience of an implant surgery, by managing, as a set, drills with individual functions to perform a dedicated drill work for doubling a cutting force for an unusual and sophisticated implant surgery

### ADVANTAGEOUS EFFECTS

According to the present inventive concept, the efficiency of management and handling may be increased and also the convenience of an implant surgery may be remarkably improved, by managing, as a set, drills with individual functions to perform a dedicated drill work for doubling a cutting force for an unusual and sophisticated implant surgery.

### DESCRIPTION OF THE DRAWINGS

FIG. 1 is a schematic perspective view of a multifunctional drill kit for an implant surgery according to an embodiment of the present inventive concept.
FIG. 2 is a plan view of a kit main body of FIG. 1.
FIGS. 3 to 6 are views illustrating a first shaping drill.
FIGS. 7 to 10 are views illustrating a second shaping drill.
FIGS. 11 to 14 are views illustrating a first stopper drill.
FIGS. 15 to 18 are view illustrating a second stopper drill.
FIG. 19 is a layout view illustrating a comparison of major portions of the first and second stopper drills.

### BEST MODE

According to an aspect of the present inventive concept, a multifunctional drill kit for an implant surgery includes: a kit main body in which a plurality of drill holding grooves are formed; and a cutting-force doubling drill set attachably/detachably arranged in at least any one of the plurality of drill holding grooves of the kit main body, and performing a dedicated drill work that doubles a cutting force to an alveolar bone when processing a screw hole.

The cutting-force doubling drill set may include: a first stopper drill that doubles a cutting force to the alveolar bone when processing the screw hole; and a second stopper drill in which the size of a portion for processing the screw hole is manufactured to be greater than the size of the first stopper drill.

Both of the first and second stopper drills may include: a cutting force-doubling screw hole processing portion inserted into the alveolar bone and processing the screw hole while doubling a cutting force to the alveolar bone; and a cutting force-doubling shaft connected to the cutting force-doubling screw hole processing portion.

The cutting force-doubling screw hole processing portion may include: a stopper drill body portion; and a plurality of twist blade portions radially arranged in a twisted shape to protrude outwardly in a radial direction of the stopper drill body portion and processing the alveolar bone.

The plurality of twist blade portions may each be manufactured in a non-linear shape, and at least one cutting blade portion may be formed in the plurality of twist blade portions.

The cutting force-doubling screw hole processing portion may further include a stopper drill entrance portion formed in an end portion of the stopper drill body portion to enter the alveolar bone.

A stopper identification pattern portion for identification of a corresponding drill may be formed in one side of the cutting force-doubling shaft.

A round processing portion for reducing a contact with neighboring teeth may be further formed on the cutting force-doubling shaft adjacent to the stopper identification pattern portion.

A degree of inclination of a first twist blade portion of the first stopper drill is arranged closer to a virtual center axial line than a degree of inclination of a second twist blade portion of the second stopper drill.

The multifunctional drill kit for an implant surgery may further include a screw hole depth step adjusting drill set that is attachably/detachably arranged in at least another of the plurality of drill holding grooves of the kit main body, and performs a dedicated drill work to process the screw hole to be formed in the alveolar bone by adjusting the depth of the screw hole during an implant surgery.

The screw hole depth step adjusting drill set may include: a first shaping drill processing the screw hole by adjusting the depth of the screw hole step by step; and a second shaping drill in which the size of a portion for processing the screw hole is manufactured to be greater than the size of the first shaping drill.

Both of the first and second shaping drill may include: the depth adjusting screw hole processing portion substantially inserted into the alveolar bone and processing the screw hole by adjusting the depth of the screw hole step by step; and the depth adjusting shaft connected to the depth adjusting screw hole processing portion.

The depth adjusting screw hole processing portion may include: a shaping drill body portion; and a plurality of shaping blade portions radially protruding outwardly in a radial direction of the shaping drill body portion and processing the alveolar bone.

A plurality of cutting edge groove portions may be formed in each of the plurality of shaping blade portions in a length direction of the depth adjusting shaft.

The sizes of the plurality of cutting edge groove portions may be different from each other, and each of the plurality of shaping blade portions sectioned by the plurality of cutting edge groove portions may have a stepped shape.

The depth adjusting screw hole processing portion may further include a shaping drill entrance portion formed in an end portion of the shaping drill body portion to enter the alveolar bone.

A shaping identification pattern portion for identification of a corresponding drill may be formed in one side of the depth adjusting shaft.

The multifunctional drill kit for an implant surgery may further include a kit cover that is coupled to the kit main body to be capable of opening/closing the kit main body.

### MODE OF THE INVENTIVE CONCEPT

In order to fully understand the operational advantages of the present inventive concept and the objectives achieved by the implementation of the present inventive concept, the accompanying drawings illustrating preferred embodiments of the present inventive concept and the contents described in the accompanying drawings are referred to.

Hereinafter, the inventive concept will be described in detail by explaining preferred embodiments of the inventive concept with reference to the attached drawings. Like reference numerals in the drawings denote like elements.

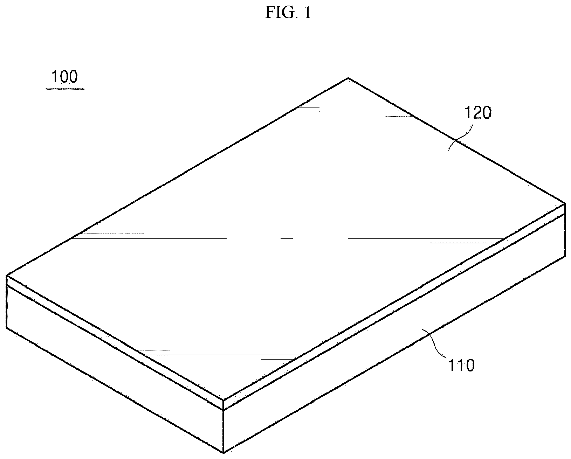

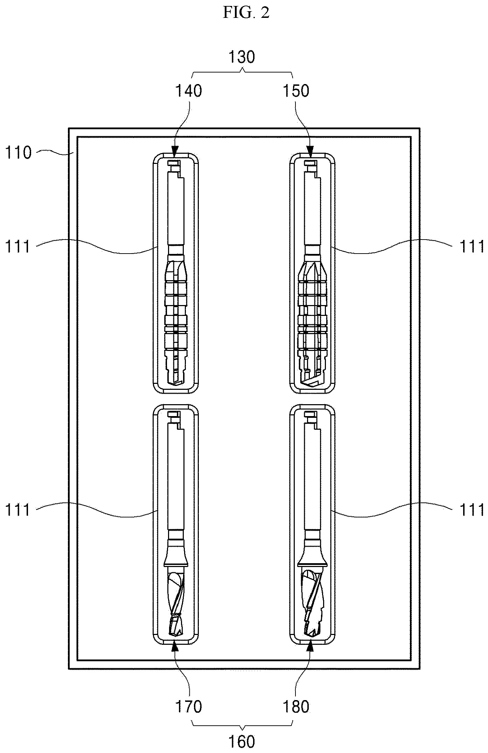

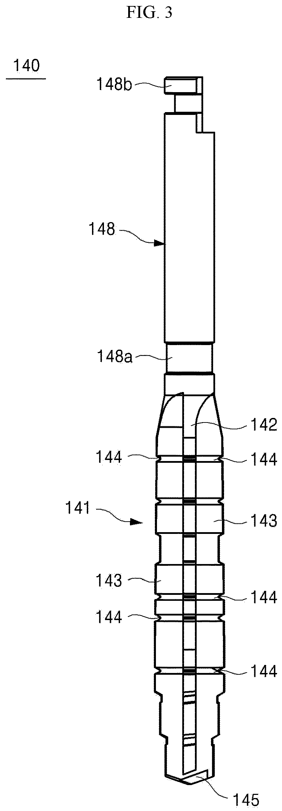

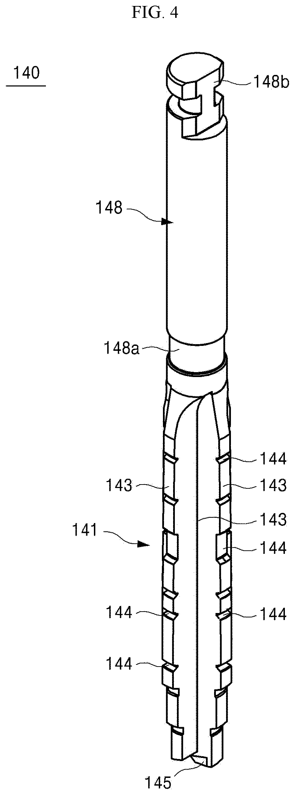

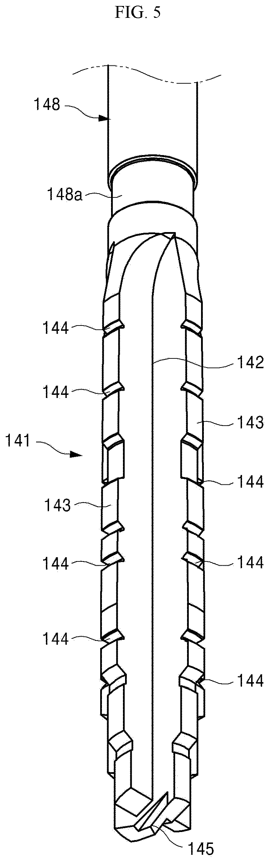

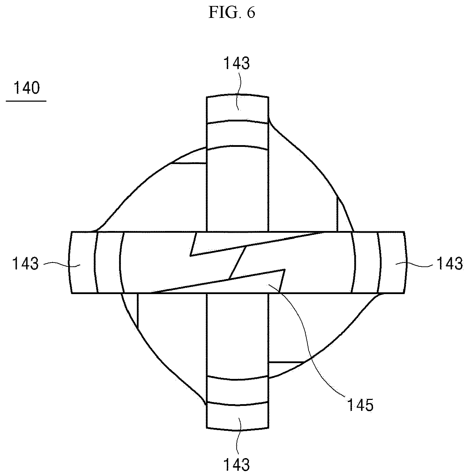

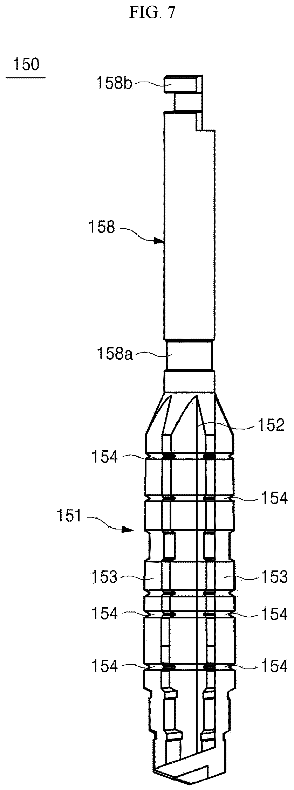

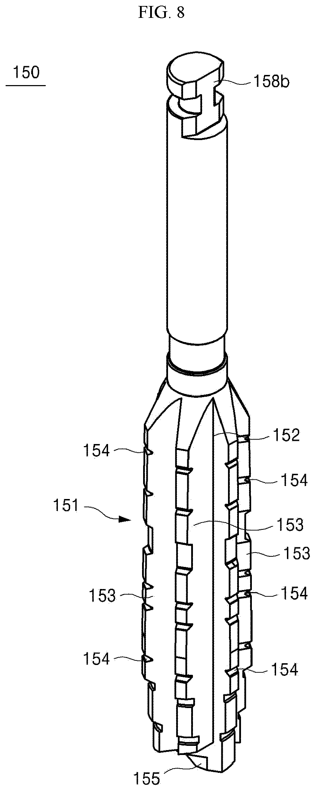

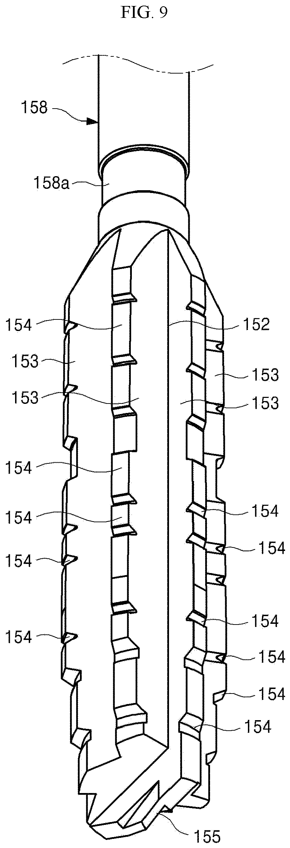

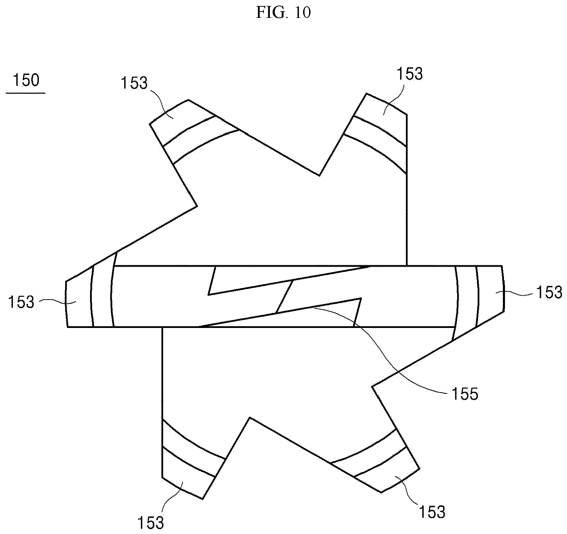

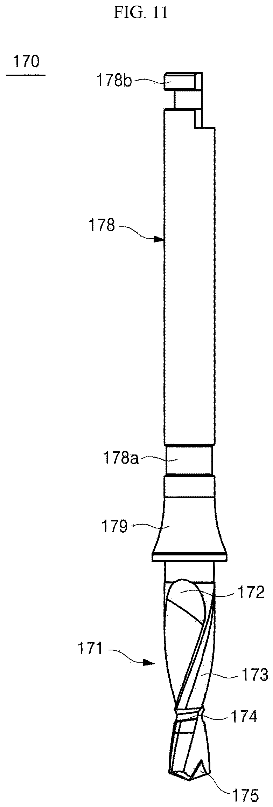

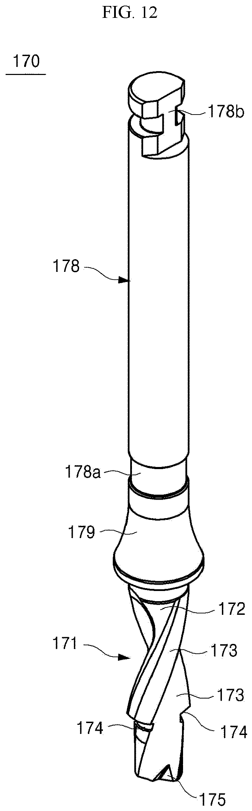

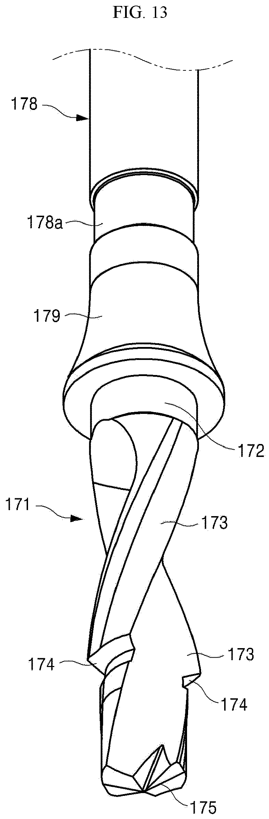

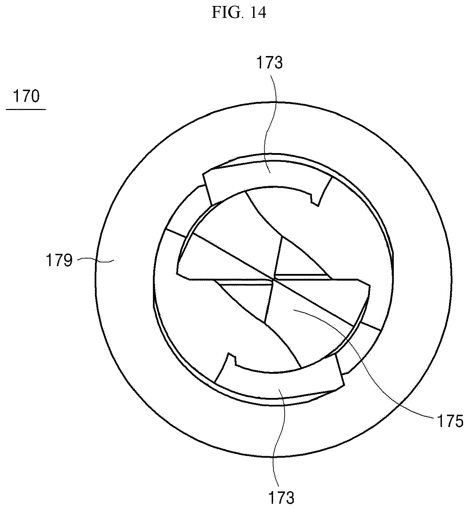

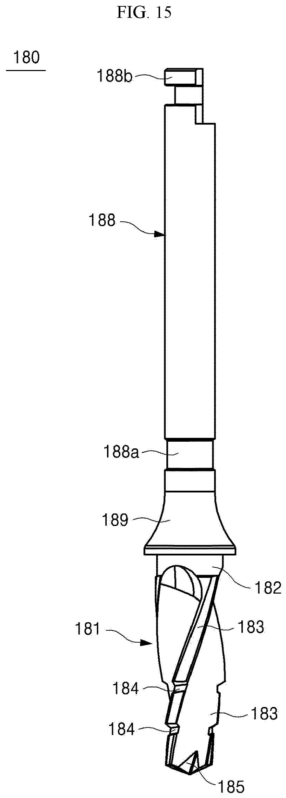

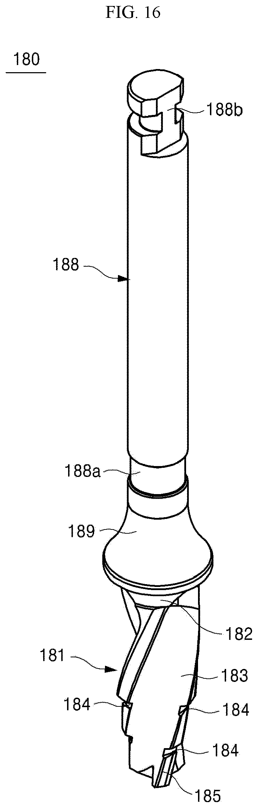

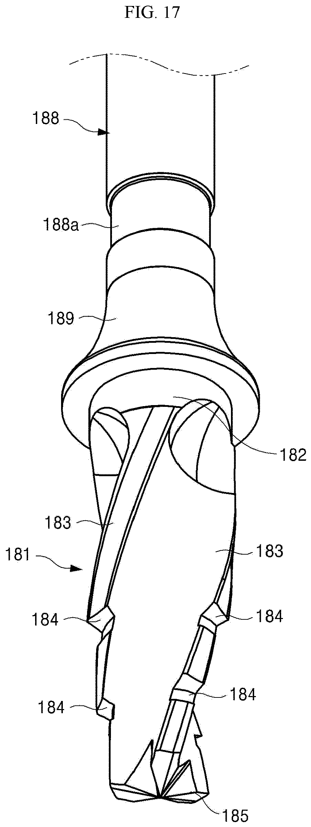

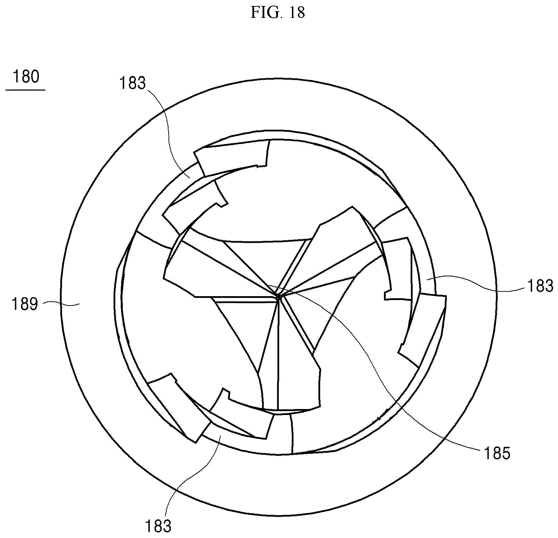

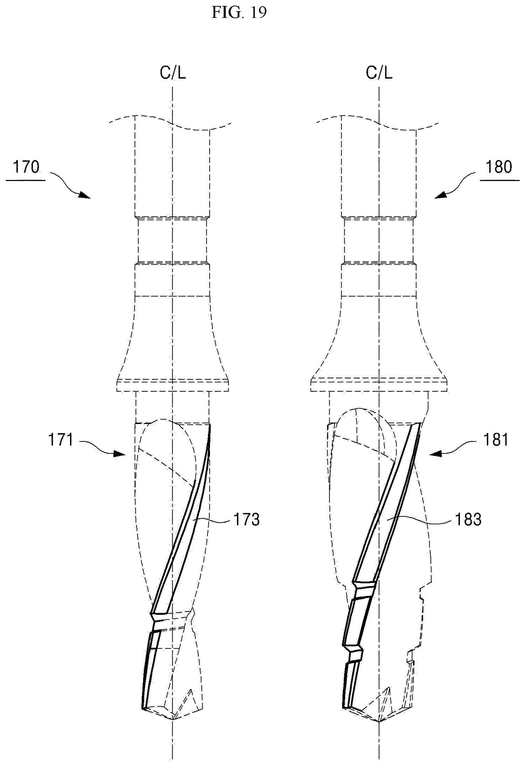

FIG. 1 is a schematic perspective view of a multifunctional drill kit for an implant surgery according to an embodiment of the present inventive concept. FIG. 2 is a plan view of a kit main body of FIG. 1. FIGS. 3 to 6 are views illustrating a first shaping drill. FIGS. 7 to 10 are views illustrating a second shaping drill. FIGS. 11 to 14 are views illustrating a first stopper drill. FIGS. 15 to 18 are view illustrating a second stopper drill. FIG. 19 is a layout view illustrating a comparison of major portions of the first and second stopper drills.

Referring to these drawings, a multifunctional drill kit 100 for an implant surgery according to the present embodiment may increase efficiency of management and handling and also remarkably improve convenience of an implant surgery, by managing, as a set, drills with individual functions to perform a dedicated drill work for doubling a cutting force for an unusual and sophisticated implant surgery.

The multifunctional drill kit 100 for an implant surgery according to the present embodiment capable of providing such an effect may include a kit main body 110, a screw hole depth step adjusting drill set 130 and a cutting-force doubling drill set 160, which are provided in kit main body 110, and a kit cover 120 for opening/closing the kit main body 110.

In the following description, although both of the screw hole depth step adjusting drill set 130 and the cutting-force doubling drill set 160 are described and illustrated as being provided in the kit main body 110, only the cutting-force doubling drill set 160 may be provided in the kit main body 110, and all of these matters fall within the scope of rights of the present inventive concept.

The kit main body 110 is an exterior structure of the multifunctional drill kit 100 for an implant surgery according to the present embodiment. As illustrated in FIG. 2, the screw hole depth step adjusting drill set 130 and the cutting-force doubling drill set 160 may be mounted inside the kit main body 110.

A plurality of drill holding grooves 111 are formed in the kit main body 110 such that drills 140, 150, 170, and 180 constituting the screw hole depth step adjusting drill set 130 and the cutting-force doubling drill set 160 can be mounted inside the kit main body 110.

The drill holding grooves 111 may each be manufactured in the form of a groove so that the drills 140, 150, 170, and 180, each having a rod type structure, are inserted thereinto.

For convenience, although the drill holding grooves 111 are schematically illustrated in the drawings, a structure, for example, a finger recess and the like, for facilitating putting-in and taking-out of the drills 140, 150, 170, and 180 may be added to each of the drill holding grooves 111.

Furthermore, although the drawings illustrate four drill holding grooves as the drill holding grooves 111, the number thereof may be more or less than four. Accordingly, the scope of rights of the present inventive concept is not limited to the shape of the drawings.

Prior to the descriptions of the screw hole depth step adjusting drill set 130 and the cutting-force doubling drill set 160, the kit cover 120 is arranged in an opening of the kit main body 110, and serves to open/close the opening of the kit main body 110.

The kit cover 120 of a lid type may be adopted, the kit cover 120 of a sliding type may be adopted, or the kit cover 120 of a rotating type may be adopted, in which all of these matters fall within the scope of rights of the present inventive concept.

Although the drawings simply illustrate the kit cover 120, a transparent or semi-transparent window for observing the inside may be applied to the kit cover 120. As such, when the transparent or semi-transparent window is applied to the kit cover 120, without opening the kit cover 120, the screw hole depth step adjusting drill set 130 and the cutting-force doubling drill set 160 in the kit main body 110 may be checked so that convenience in use may be improved.

Meanwhile, as illustrated in FIG. 2, the screw hole depth step adjusting drill set 130 is attachably/detachably arranged in at least any one of the drill holding grooves 111 of the kit main body 110, and is a drill set for performing a dedicated drill work by processing a screw hole to be formed in the alveolar bone by adjusting the depth of the screw hole during an implant surgery.

The cutting-force doubling drill set 160 is attachably/detachably arranged in at least any one of the drill holding grooves 111 of the kit main body 110, and is a drill set for performing a dedicated drill work for doubling a cutting force to the alveolar bone when processing a screw hole.

Although, for convenience, the screw hole depth step adjusting drill set 130 is illustrated as two first and second shaping drills 140 and 150, and the cutting-force doubling drill set 160 is illustrated as first and second stopper drills 170 and 180, the screw hole depth step adjusting drill set 130 and the cutting-force doubling drill set 160 may each be three or more drills.

The screw hole depth step adjusting drill set 130 is first described in detail with reference to FIGS. 2 to 10.

The screw hole depth step adjusting drill set 130 may include a first shaping drill 140 processing a screw hole by adjusting the depth of the screw hole step by step, and a second shaping drill 150 in which the size of a portion for processing a screw hole is manufactured to be greater than that of the first shaping drill 140, which are attachably/detachably arranged in at least any one of the drill holding grooves 111 of the kit main body 110, as described above.

The first shaping drill 140 and the second shaping drill 150 have the same functions and roles. However, specific configurations to perform the functions and role are different from each other.

In the first shaping drill 140, as illustrated in FIGS. 3 to 6, the first shaping drill 140 may include a first depth adjusting screw hole processing portion 141 that is substantially inserted into the alveolar bone and processes a screw hole by adjusting the depth of the screw hole step by step, and a first depth adjusting shaft 148 connected to the first depth adjusting screw hole processing portion 141. As such, the first shaping drill 140, as a dedicated drill for processing a screw hole by adjusting the depth of the screw hole step by step, is manufactured in a structure different from a typical drill.

The first depth adjusting screw hole processing portion 141 is a portion that substantially forms a screw hole in the alveolar bone. The screw hole forms a place where a fixture is to be placed during an implant surgery, as described above.

The first depth adjusting screw hole processing portion 141 may include a first shaping drill body portion 142 and a plurality of first shaping blade portions 143 radially protruding outwardly in a radial direction of the first shaping drill body portion 142 and processing the alveolar bone.

In the present embodiment, the first shaping blade portions 143 has a structure protruding in the form of a cross outwardly in the radial direction of the first shaping drill body portion 142. In this state, a plurality of first cutting edge groove portions 144 are formed in the first shaping blade portions 143 along the length direction of the first depth adjusting shaft 148. The first cutting edge groove portions 144 refer to portions processed in the form of a groove or notch in an edge portion of each of the first shaping blade portions 143.

The first cutting edge groove portions 144 may have different sizes from each other. The first shaping blade portions 143 sectioned by the first cutting edge groove portions 144 may each have a stepped shape. As such, the first shaping blade portions 143 are formed outwardly in the radial direction of the first shaping drill body portion 142 and the first cutting edge groove portions 144 are processed in the first shaping blade portions 143, thereby implementing the first shaping blade portions 143 each having a stepped structure. Thus, it is convenient for the first depth adjusting screw hole processing portion 141 inserted into the alveolar bone to process a screw hole by adjusting the depth of the screw hole. Accordingly, it may be a great help to precision machining.

A first shaping drill entrance portion 145 is formed in an end portion of the first shaping drill body portion 142. The first shaping drill entrance portion 145 is a device formed in the end portion of the first shaping drill body portion 142 to enter the alveolar bone. As the first shaping drill entrance portion 145 is a type of digging into the alveolar bone by first forming a hole, even when a drill work continues, a screw hole may be processed accurately in a desired direction without being crooked.

The first depth adjusting shaft 148 has a rod type structure connected to the first depth adjusting screw hole processing portion 141, as described above. A first tool mounting portion 148b is provided in an end portion of the first depth adjusting shaft 148. The first tool mounting portion 148b may be a portion used for mounting the first shaping drill 140 according to the present embodiment on separate electric drill equipment.

A first shaping identification pattern portion 148a for identification of a corresponding drill is formed in one side of the first depth adjusting shaft 148, that is, at a position adjacent to the first depth adjusting screw hole processing portion 141. The first shaping identification pattern portion 148a may be colorful so that a corresponding drill can be easily identified through color. The first shaping identification pattern portion 148a may be attached in a taping method or painted or coated in a painting method, and any method may be adopted.

Next, in the second shaping drill 150, as described above, the second shaping drill 150 have the same functions and roles as the first shaping drill 140, as described above. However, specific configurations for performing the functions and roles thereof are slight different.

As a whole, as illustrated in FIGS. 7 to 10, the second shaping drill 150 may also include a second depth adjusting screw hole processing portion 151 that is substantially inserted into the alveolar bone and processes a screw hole by adjusting the depth of the screw hole step by step, and a second depth adjusting shaft 158 connected to the second depth adjusting screw hole processing portion 151. As such, the second shaping drill 150, as a dedicated drill for processing a screw hole by adjusting the depth of the screw hole step by step, is manufactured in a structure different from a typical drill.

The second depth adjusting screw hole processing portion 151 may include a second shaping drill body portion 152 and a plurality of second shaping blade portions 153 that is radially protruding outwardly in the radial direction of the second shaping drill body portion 152 and processes the alveolar bone.

In the present embodiment, the second shaping blade portions 153 form a structure obliquely protruding in six directions in the form of a starfish outwardly in the radial direction of the second shaping drill body portion 152. In this state, a plurality of second cutting edge groove portions 154 are formed in the second shaping blade portions 153 in the length direction of the second depth adjusting shaft 158. The second cutting edge groove portions 154 refer to portions processed in the form of a grove or notch in an edge portion of each of the second shaping blade portions 153.

The second cutting edge groove portions 154 may have different sizes from each other. The second shaping blade portions 153 sectioned by the second cutting edge groove portions 154 may each have a stepped shape. As such, the second shaping blade portions 153 are formed outwardly in the radial direction of the second shaping drill body portion 152 and the second cutting edge groove portions 154 are processed in the second shaping blade portions 153, thereby implementing the second shaping blade portions 153 each having a stepped structure. Thus, it is convenient for the second depth adjusting screw hole processing portion 151 inserted into the alveolar bone to process a screw hole by adjusting the depth of the screw hole. Accordingly, it may be a great help to precision machining.

A second shaping drill entrance portion 155 is formed in an end portion of the second shaping drill body portion 152. The second shaping drill entrance portion 155 is a device formed in the end portion of the second shaping drill body portion 152 to enter the alveolar bone. As the second shaping drill entrance portion 155 is a type of digging into the alveolar bone by first forming a hole, even when a drill work continues, a screw hole may be processed accurately in a desired direction without being crooked.

The second depth adjusting shaft 158 has a rod type structure connected to the second depth adjusting screw hole processing portion 151, as described above. A second tool mounting portion 158b is provided in an end portion of the second depth adjusting shaft 158. The second tool mounting portion 158b may be a portion used for mounting the second shaping drill 150 according to the present embodiment on separate electric drill equipment.

A second shaping identification pattern portion 158a for identification of a corresponding drill is formed in one side of the second depth adjusting shaft 158, that is, at a position adjacent to the second depth adjusting screw hole processing portion 151. The second shaping identification pattern portion 158amay be colorful so that a corresponding drill can be easily identified through color. The second shaping identification pattern portion 158a may be attached in a taping method or painted or coated in a painting method, and any method may be adopted.

Next, the cutting-force doubling drill set 160 is first described in detail with reference to FIGS. 2 and 11 to 18.

The cutting-force doubling drill set 160, as described above, is attachably/detachably arranged in at least any one of the drill holding grooves 111 of the kit main body 110, and may include a first stopper drill 170 for doubling a cutting force to the alveolar bone when processing a screw hole, and a second stopper drill 180 in which the size of a portion for processing a screw hole is manufactured to be greater than that of the first stopper drill 170.

The first stopper drill 170 and the second stopper drill 180 have the same functions and roles. However, specific configurations for performing the functions and roles are different from each other.

In the first stopper drill 170, as illustrated in FIGS. 11 to 14, the first stopper drill 170 may include a first cutting force-doubling screw hole processing portion 171 inserted in the alveolar bone and processing a screw hole while doubling a cutting force to the alveolar bone, and a first cutting force-doubling shaft 178 connected to the first cutting force-doubling screw hole processing portion 171. As such, the first stopper drill 170, as a dedicated drill for doubling a cutting force to the alveolar bone without shaking is manufactured in a structure different from a typical drill.

The first cutting force-doubling screw hole processing portion 171 is a portion inserted in the alveolar bone and processing a screw hole while doubling a cutting force to the alveolar bone, without shaking, that is, vibration. The first cutting force-doubling screw hole processing portion 171 may include a first stopper drill body portion 172 and a plurality of first twist blade portions 173 radially protruding outwardly in a radial direction of the first stopper drill body portion 172 and arranged in a twisted form.

In the present embodiment, the first twist blade portions 173 is manufactured in a non-linear shape, that is, a non-linear shape twisted like a twist. At least one first cutting blade portion 174 is formed in each of the first twist blade portions 173. The first cutting blade portion 174 may include one or more first cutting blade portions, and serve to facilitate discharge of cut alveolar bone.

As such, while the first twist blade portions 173 are formed in a twisted shape outside the first stopper drill body portion 172 to process the alveolar bone, as at least one first cutting blade portion 174 is formed in the first twist blade portions 173, it is convenient for the first cutting force-doubling screw hole processing portion 171 inserted into the alveolar bone and process a screw hole while doubling a cutting force to the alveolar bone, without shaking, that is, vibration. Accordingly, it may be a great help to precision machining.

A first stopper drill entrance portion 175 is formed in the end portion of the first stopper drill body portion 172. The first stopper drill entrance portion 175 is a portion formed in the end portion of the first stopper drill body portion 172 to enter the alveolar bone. As the first stopper drill entrance portion 175 is a type of digging into the alveolar bone by first forming a hole, even when a drill work continues, a screw hole may be processed accurately in a desired direction without being crooked

The first cutting force-doubling shaft 178 has a rod type structure connected to the first cutting force-doubling screw hole processing portion 171, as described above. A first tool mounting portion 178b is provided in the end portion of the first cutting force-doubling shaft 178. The first tool mounting portion 178b may be a portion used for mounting the first stopper drill 170 according to the present embodiment on separate electric drill equipment.

A first stopper identification pattern portion 178a for identification of a corresponding drill is formed in one side of the first cutting force-doubling shaft 178, that is, at a position adjacent to the first cutting force-doubling screw hole processing portion 171. The first stopper identification pattern portion 178a may be colorful so that a corresponding drill can be easily identified through color. The first stopper identification pattern portion 178a may be attached in a taping method or painted or coated in a painting method, and any method may be adopted.

Furthermore, a first round processing portion 179 for reducing a contact with neighboring teeth is further formed on the first cutting force-doubling shaft 178 adjacent to the first stopper identification pattern portion 178a. The first round processing portion 179 may prevent touching or interfering with neighboring teeth during a drill work.

Next, in the second stopper drill 180, as described above, the second stopper drill 180 has the same functions and roles as the first stopper drill 170 described above. However, specific configurations for performing the functions and roles thereof are slight different

As a whole, as illustrated in FIGS. 15 to 18, the second stopper drill 180may include a second cutting force-doubling screw hole processing portion 181 inserted in the alveolar bone and processing a screw hole while doubling a cutting force to the alveolar bone, and a second cutting force-doubling shaft 188 connected to the second cutting force-doubling screw hole processing portion 181. As such, the second stopper drill 180, as a dedicated drill for doubling a cutting force to the alveolar bone without shaking, is manufactured in a structure different from a typical drill.

The second cutting force-doubling screw hole processing portion 181 is a portion inserted in the alveolar bone and processing a screw hole while doubling a cutting force to the alveolar bone, without shaking, that is, vibration. The second cutting force-doubling screw hole processing portion 181 may include a second stopper drill body portion 182 and a plurality of second twist blade portions 183 that are radially protruding outwardly in the radius direction of the second stopper drill body portion 182 to be arranged in a twisted shape and process the alveolar bone.

In the present embodiment, the second twist blade portions 183 is manufactured in a non-linear shape, that is, a non-linear shape twisted like a twist. At least one second cutting blade portion 184 is formed in the second twist blade portions 183. The second cutting blade portion 184 may include one or more second cutting blade portions, and serve to facilitate discharge of cut alveolar bone.

As such, while the second twist blade portions 183 are formed in a twisted shape outside the second stopper drill body portion 182 to process the alveolar bone, as at least one second cutting blade portion 184 is formed in the second twist blade portions 183, it is convenient for the second cutting force-doubling screw hole processing portion 181 inserted into the alveolar bone and to process a screw hole while doubling a cutting force to the alveolar bone, without shaking, that is, vibration. Accordingly, it may be a great help to precision machining.

A second stopper drill entrance portion 185 is formed in the end portion of the second stopper drill body portion 182. The second stopper drill entrance portion 185 is a portion formed in the end portion of the second stopper drill body portion 182 to enter the alveolar bone. As the second stopper drill entrance portion 185 is a type of digging into the alveolar bone by first forming a hole, even when a drill work continues, a screw hole may be processed accurately in a desired direction without being crooked.

The second cutting force-doubling shaft 188 has a rod type structure connected to the second cutting force-doubling screw hole processing portion 181, as described above. A second tool mounting portion 188b is provided in the end portion of the second cutting force-doubling shaft 188. The second tool mounting portion 188b may be a portion used for mounting the second stopper drill 180 according to the present embodiment on separate electric drill equipment.

A second stopper identification pattern portion 188a for identification of a corresponding drill is formed in one side of the second cutting force-doubling shaft 188, that is, at a position adjacent to the second cutting force-doubling screw hole processing portion 181. The second stopper identification pattern portion 188a may be colorful so that a corresponding drill can be easily identified through color. The second stopper identification pattern portion 188a may be attached in a taping method or painted or coated in a painting method, and any method may be adopted.

Furthermore, a second round processing portion 189 for reducing a contact with neighboring teeth is further formed on the second cutting force-doubling shaft 188 adjacent to the second stopper identification pattern portion 188a. The second round processing portion 189 may prevent touching or interfering with neighboring teeth during a drill work.

Meanwhile, in the present embodiment, as illustrated in FIG. 19, a degree of inclination of each of the first twist blade portions 173 of the first stopper drill 170 is arranged closer to a virtual center axial line C/L than a degree of inclination of each of the second twist blade portions 183 of the second stopper drill 180. In other words, in a process of working by using the second stopper drill 180 after working by using the first stopper drill 170, by releasing the angle, the control of a drill work may be made easy.

As described above, by integrally managing the screw hole depth step adjusting drill set 130 and the cutting-force doubling drill set 160 by putting the same in the kit main body 110, it is possible to remove the inconvenience of having to manage and handle individual drills one by one as before, and thus, a sophisticated implant surgery to be performed.

According to the present embodiment configured and operated as above, by managing, as a set, the drills 160 with individual functions to perform a dedicated drill work for doubling a cutting force for an unusual and sophisticated implant surgery, efficiency of management and handling may be increased and also convenience of an implant surgery may be remarkably improved.

As such, while the disclosure has been particularly shown and described with reference to preferred embodiments using specific terminologies, the embodiments and terminologies should be considered in descriptive sense only and not for purposes of limitation. Therefore, it will be understood by those of ordinary skill in the art that various changes in form and details may be made therein without departing from the spirit and scope of the disclosure as defined by the following claims.

### Industrial Applicability

The present inventive concept is industrially applicable in the dental treatment.

## Claims

1. A multifunctional drill kit for an implant surgery comprising:
a kit main body in which a plurality of drill holding grooves are formed; and
a cutting-force doubling drill set attachably/detachably arranged in at least any one of the plurality of drill holding grooves of the kit main body, and performing a dedicated drill work that doubles a cutting force to an alveolar bone when processing a screw hole.

2. The multifunctional drill kit for an implant surgery of claim 1, wherein the cutting-force doubling drill set comprises:
a first stopper drill that doubles a cutting force to the alveolar bone when processing the screw hole; and
a second stopper drill in which a size of a portion for processing the screw hole is manufactured to be greater than a size of the first stopper drill.

3. The multifunctional drill kit for an implant surgery of claim 2, wherein both of the first and second stopper drills comprise:
a cutting force-doubling screw hole processing portion inserted into the alveolar bone and processing the screw hole while doubling a cutting force to the alveolar bone; and
a cutting force-doubling shaft connected to the cutting force-doubling screw hole processing portion.

4. The multifunctional drill kit for an implant surgery of claim 3, wherein the cutting force-doubling screw hole processing portion comprises:
a stopper drill body portion; and
a plurality of twist blade portions radially arranged in a twisted shape to protrude outwardly in a radial direction of the stopper drill body portion and processing the alveolar bone.

5. The multifunctional drill kit for an implant surgery of claim 4, wherein each of the plurality of twist blade portions are manufactured in a non-linear shape, and
at least one cutting blade portion is formed in each of the plurality of twist blade portions.

6. The multifunctional drill kit for an implant surgery of claim 4, wherein the cutting force-doubling screw hole processing portion further comprises a stopper drill entrance portion formed in an end portion of the stopper drill body portion to enter the alveolar bone.

7. The multifunctional drill kit for an implant surgery of claim 3, wherein
a stopper identification pattern portion for identification of a corresponding drill is formed in one side of the cutting force-doubling shaft.

8. The multifunctional drill kit for an implant surgery of claim 7, wherein a round processing portion for reducing a contact with neighboring teeth is further formed on the cutting force-doubling shaft adjacent to the stopper identification pattern portion.

9. The multifunctional drill kit for an implant surgery of claim 4, wherein a degree of inclination of a first twist blade portion of the first stopper drill is arranged closer to virtual center axial line than a degree of inclination of a second twist blade portion of the second stopper drill.

10. The multifunctional drill kit for an implant surgery of claim 1, further comprising a screw hole depth step adjusting drill set that is attachably/detachably arranged in at least another of the plurality of drill holding grooves of the kit main body, and performs a dedicated drill work to process the screw hole to be formed in the alveolar bone by adjusting a depth of the screw hole during an implant surgery.

11. The multifunctional drill kit for an implant surgery of claim 10, wherein the screw hole depth step adjusting drill set comprises:
a first shaping drill processing the screw hole by adjusting a depth of the screw hole step by step; and
a second shaping drill in which a size of a portion for processing the screw hole is manufactured to be greater than a size of the first shaping drill.

12. The multifunctional drill kit for an implant surgery of claim 11, wherein both of the first and second shaping drill comprise:
a depth adjusting screw hole processing portion substantially inserted into the alveolar bone and processing the screw hole by adjusting a depth of the screw hole step by step; and
a depth adjusting shaft connected to the depth adjusting screw hole processing portion.

13. The multifunctional drill kit for an implant surgery of claim 12, wherein the depth adjusting screw hole processing portion comprises:
a shaping drill body portion; and
a plurality of shaping blade portions radially protruding outwardly in a radial direction of the shaping drill body portion and processing the alveolar bone.

14. The multifunctional drill kit for an implant surgery of claim 13, wherein a plurality of cutting edge groove portions are formed in each of the plurality of shaping blade portions in a length direction of the depth adjusting shaft.

15. The multifunctional drill kit for an implant surgery of claim 14, wherein sizes of the plurality of cutting edge groove portions are different from each other, and
each of the plurality of shaping blade portions sectioned by the plurality of cutting edge groove portions has a stepped shape.

16. The multifunctional drill kit for an implant surgery of claim 13, wherein the depth adjusting screw hole processing portion further comprises a shaping drill entrance portion formed in an end portion of the shaping drill body portion to enter the alveolar bone.

17. The multifunctional drill kit for an implant surgery of claim 12, wherein a shaping identification pattern portion for identification of a corresponding drill is formed in one side of the depth adjusting shaft.

18. The multifunctional drill kit for an implant surgery of claim 1, further comprising a kit cover coupled to the kit main body to be capable of opening/closing the kit main body.
